# EUROPÄISCHE PATENTSCHRIFT

(11) **EP 0 934 627 B1**
(45) Veröffentlichungstag und Bekanntmachung des Hinweises auf die Patenterteilung: **03.11.2004**
(21) Anmeldenummer: 96924861.6
(22) Anmeldetag: 03.07.1996
(51) Int. Cl.: H03K 5/08

(54) **SCHALTUNGSANORDNUNG ZUM AUSWERTEN EINES BINÄREN, DURCH STROMSCHWELLENWERTE DEFINIERTEN SIGNALS**
CIRCUIT ARRANGEMENT FOR EVALUATING A BINARY SIGNAL DEFINED BY CURRENT THRESHOLD VALUES
CIRCUITERIE POUR EVALUER UN SIGNAL BINAIRE DEFINI PAR DES VALEURS SEUILS DE COURANT

(30) Priorität: 20.09.1995 DE 19534825
(43) Veröffentlichungstag der Anmeldung: 11.08.1999
(73) Patentinhaber: Continental Teves AG & Co. oHG, 60488 Frankfurt (DE)
(72) Erfinder: ZYDEK, Michael, D-35428 Langgöns (DE); FEY, Wolfgang, D-65527 Niedernhausen (DE)
(86) Internationale Anmeldenummer: PCT/EP1996/002908
(87) Internationale Veröffentlichungsnummer: WO 1997/011528

(56) Entgegenhaltungen:
- DE-A- 2 737 024
- DE-A- 3 234 637
- JP-A- 4 366 766
- US-A- 4 651 138
- US-A- 5 224 007

## Beschreibung

Die Erfindung bezieht sich auf einen Regler der die im Oberbegriff des Anspruchs 1 genannten Merkmale besitzt. Eine Schaltungsanordnung zur Auswertung eines Sensorsignals ist in der alteren, nicht vorveröffentlichten deutschen Patentanmeldung 195 10 055.7 (P 7850) beschrieben. Als Quelle für dieses binäre Signal ist insbesondere von einem aktiven Sensor die Rede. Dieser Sensor erzeugt ein Rechtecksignal auf Basis von zwei unterschiedlichen Stromwerten oder Stromschwellen. Die Frequenz dieses Rechtecksignals enthält die zu messende Information.

Aus der älteren, nicht vorveröffentlichten DE 44 34 180 A1 (P 7748) ist eine Schaltungsanordnung zur Auswertung eines binären Stromsignals, also auch des Ausgangssignals eines aktiven Sensors, bekannt, bei der mit Hilfe einer Stromspiegelschaltung ein zum Sensorstrom proportionaler Signalstrom gewonnen wird. Dieser Signalstrom wird über einen ohmschen Widerstand einer Quelle mit konstanter Spannung entnommen, wodurch ein dem Sensor-Ausgangssignal entsprechendes binäres Spannungssignal entsteht. Die Stromspiegelschaltung dient also zur Wandlung des Sensor-Stromsignals in ein binäres Spannungssignal, das dann mit geringem Aufwand und vor allem mit geringem Leistungsbedarf weiterverarbeitet werden kann.
Aktive Sensoren der hier in Rede stehenden Art lassen sich beispielsweise als Radsensoren zur Bestimmung des Drehverhaltens der einzelnen Fahrzeugräder eines Kraftfahrzeuges verwenden. Das Raddrehverhalten ist eine besonders wichtige Eingangsgröße für Kraftfahrzeug-Regelungssysteme, die z. B. zum Blockierschutz, zur Antriebsschlupfregelung, zur Fahrstabilitätsregelung usw. eingesetzt werden.

Diese Regelungssysteme oder manche ihrer Funktionen gelten als sicherheitskritisch, weil bei einem Defekt die Bremsenfunktion und/oder die Fahrstabilität gefährdet sein kann. Es sind daher zahlreiche Überwachungsmaßnahmen, Fehleranzeigen usw. vorgeschrieben.

Besonderer Wert wird auch darauf gelegt, daß die Anschlußstifte oder Anschlußpins, mit denen z. B. der Regler eines ABS versehen ist und die zum Anschluß der Radsensoren und anderer Komponenten dienen, bzw. die zugehörigen Schaltungen kurzschlußfest ausgelegt sind. Da bei einem Kraftfahrzeug üblicherweise die Verbraucher durch Anschluß an Masse mit einem Pol der Fahrzeugbatterie bzw. an das Stromversorgungsaggregat angeschlossen sind, bedeutet dies, daß die zweiten, individuellen Anschlüsse oder Anschlußpins zum zweiten Pol der Batterie führen. Dies gilt auch für die Anschlußpins der Sensoren.

Bei Verbindung der Sensor-Anschlußpins mit Masse muß daher ein Kurzschluß- oder Überlastschutz wirksam werden. In der Praxis hat dies zur Folge, daß die zur Batterie bzw. zu dem Individualanschluß der Batterie (z.B. zum positiven Pol) führenden Anschlüsse über eine Strombegrenzungsschaltung, die bei Kurzschluß den Strom auf einen zulässigen Wert begrenzt, geführt werden müssen.

Weiterhin ist vorgeschrieben, daß mehrere voneinander unabhängige Anschlüsse für die Sensoren vorhanden sind, damit bei einem Sensordefekt bzw. Kurzschluß eines Sensoranschlusses die Auswirkung dieses Kurzschlusses beschränkt ist und die anderen Sensoren oder zumindest einige der anderen Sensoren weiterhin in Funktion bleiben. Folglich muß jeder der zu schützenden Anschlüsse mit einem separaten Strombegrenzer ausgerüstet werden.

Aus der DE-A-32 34 637 geht eine Schaltungsanordnung zum Auswerten eines Raddrehzahlsensorsignals hervor, bei der als Strombegrenzung und Überlastschutz eine Stromquelle zwischen Batterieanschluß und Sensoranschluß eingefügt ist.

Die JP-A-04 366 766 gibt eine Schaltungsanordnung zur Erkennung von Radsensorfehlern an, in der jedoch keine Einzelstromquellen zur Auswertung der Überschreitung bzw. Unterschreitung von Signalschwellen genutzt werden.

Der Erfindung liegt nun die Aufgabe zugrunde, bei einem Regler mit einer Schaltungsanordnung der eingangs genannten Art den erforderlichen Aufwand zur kurzschlußsicheren Auslegung der Anschlußpins erheblich zu verringern und diese so auszulegen, daß ein Fehler im Signalstrom des Sensors durch die Schaltung erkennbar ist.

Es hat sich gezeigt, daß diese Aufgabe durch die im Kennzeichen des Anspruchs 1 beschriebene Weiterbildung eines solchen Regler gelöst werden kann.

Durch die erfindungsgemäß vorgesehene Anbindung des Sensors bzw. der Stromquelle wird die Strombegrenzungsschaltung, die bisher zwischen den Anschlußpin und den Batterieanschluß eingefügt werden mußte, überflüssig. Außerdem wird eine individuelle Absicherung jedes Sensoranschlusses gegen Kurzschluß erreicht, weil ohnehin jeder Sensor bzw. jede Sensor-Auswerteschaltung mit einer separaten Stromquelle zur Auswertung des Sensorsignales ausgerüstet ist.

Der Verzicht auf diese Strombegrenzer bedeutet eine erhebliche Einsparung. Im Gegensatz zu den herkömmlichen Strombegrenzern ist die erfindungsgemäße Schaltungsanordnung sehr leicht durch eine integrierte Schaltung zu realisieren. Diese integrierte Schaltung läßt sich dann auf einfacher Weise durch eine thermische Sicherung, die ebenfalls auf Halbleiterbasis aufgebaut und integriert ist, vor Überlastung durch zu hohe, beispielsweise durch einen andauernden Kurzschluß verursachte Verlustleistung schützen.

In den Unteransprüchen sind einige besonders vorteilhafte Ausführungsbeispiele der erfindungsgemäßen Schaltungsanordnung beschrieben.

Weitere Merkmale, Vorteile und Anwendungsmöglichkeiten der Erfindung gehen aus der folgenden Beschreibung von Ausführungsbeispielen anhand der beigefügten Abbildungen hervor.

Es zeigen
- Fig. 1: schematisch vereinfacht eine Schaltungsanordnung zur Auswertung der Ausgangssignale eines aktiven Sensors,
- Fig. 2: in gleicher Darstellungsweise eine Schaltungsanordnung zur Veranschaulichung der Fehlererkennung,
- Fig. 3: einen Teil einer integrierten Schaltung zur Realisierung der Schaltung nach Fig. 2,
- Fig. 4: in gleicher Darstellungsweise wie Fig. 2 ein Ausführungsbeispiel einer Schaltungsanordnung nach der Erfindung und
- Fig. 5: im Detail eine Stromquelle der Schaltungsanordnung nach Fig. 4.

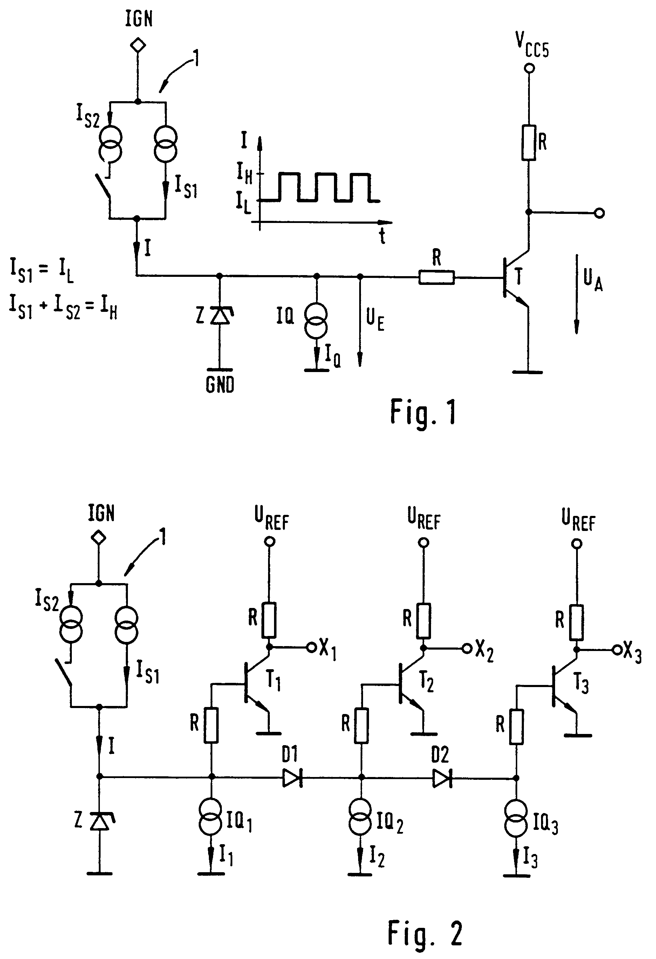

Dem Ausführungsbeispiel nach Fig. 1 liegt die Verwendung eines aktiven Drehzahlsensors 1 in einem Kraftfahrzeug zugrunde. Ein solcher Sensor 1 kann Bestandteil eines Kraftfahrzeug-Regelungssystems sein. Mit Hilfe solcher Sensoren bzw. Radsensoren läßt sich ein Signal gewinnen, dessen Frequenz der Drehgeschwindigkeit des jeweiligen Rades proportional ist.

Im dargestellten Beispiel ist das Meßelement ein aktiver Sensor 1, dessen Ausgangssignal durch zwei Stromschwellenwerte, nämlich einen Low-Strom von 7 mA und einem High-Strom von 14 mA, gebildet wird. Der Low-Strom ist erforderlich, um die ordnungsgemäße Funktion des aktiven Sensors 1 aufrechtzuerhalten. Zur Stromversorgung dient hier ein Anschluß IGN, durch den in einem Kraftfahrzeug beim Einschalten der Zündung der Anschluß an den positiven Pol der Fahrzeugbatterie hergestellt wird. Der Masseanschluß führt zum negativen Pol der Batterie.

Der Radsensor 1 ist hier als eine Stromquelle symbolisch dargestellt, die sich aus zwei Einzelstromquellen zusammensetzt. Eine dieser Einzelstromquellen liefert den Low-Strom I_{L} = I_{S1}, der in der High-Phase des Signals durch Parallelschalten der zweiten Einzelstromquelle bzw. durch eine zusätzliche Stromkomponente I_{S2} zu dem High-Strom I_{H} =I_{S1} + I_{S2} ergänzt wird.

In Serie zu dem aktiven Sensor 1 ist eine zweite Stromquelle IQ geschaltet, die für einen Nennstrom I_{Q} ausgelegt ist. Genau genommen handelt es sich bei dieser Stromquelle um eine Stromsenke, wie aus den folgenden Erläuterungen ersichtlich wird.

Der Nennstrom I_{Q} liegt über dem unteren Stromschwellenwert des Sensors 1, nämlich dem Low-Strom I_{L}. Zweckmäßigerweise wird ein Nennstrom I_{Q} für die Stromquelle IQ gewählt, der einem mittleren Wert zwischen den beiden Stromschwellenwerten I_{L} und I_{H} entspricht. Parallel zur Spannungsquelle IQ liegt eine Verstärkerstufe, hier die Basis-Emitterstrecke eines Transistors T₂. Der Spannungsabfall über der Stromquelle IQ ist gleichzeitig die Eingangsspannung U_{E} der Vertärkerstufe T. Die Schaltung nach Fig. 1 funktioniert wie folgt:

Solange der Strom über dem Sensor 1 unter dem Nennstrom bzw. dem eingeprägten Strom der Stromquelle IQ liegt, was in der Low-Phase des Sensors 1 zutrifft, wird das Potential U_{E} am Eingang der Verstärkerschaltung T durch die Stromquelle IQ nahezu auf Massepotential GND reduziert. Der Transistor T sperrt. Das Ausgangssignal bzw. das Ausgangspotential U_{A} der Verstärkerschaltung, nämlich das Potential am Kollektor des Transistors T, ist "high"; das Ausgangssignal U_{A} nimmt den vollen Wert der Versorgungsspannung V_{CC5} an.

Sobald dagegen der Sensorstrom I über den Nennstrom I_{Q} der Stromquelle IQ ansteigt, wird der Transistor T angesteuert. Dies ist in der High-Phase, wenn der Sensor 1 den High-Strom I_{H} liefert, der Fall. Die Stromquelle Q ist nämlich lediglich in der Lage, ihren Nennstrom I_{Q} aufzunehmen. Der darüber hinausgehende Strom führt zum Anstieg des Potentials U_{E}, zum Durchsteuern des Transistors T und damit zu einem "low" des Ausgangssignals U_{A} . In dieser Phase wird durch eine parallel zur Stromquelle IQ liegende Zenerdiode Z das Eingangspotential U_{E} begrenzt. Ein Stromfluß über die Zenerdiode Z stellt außerdem sicher, daß ein für den Betrieb des Sensors 1 ausreichender Strom I_{H} fließen kann.

Die Schaltung nach Fig. 1 läßt sich sehr einfach und mit geringem Aufwand zu einer Schaltung erweitern, die in der Lage ist, Sensorfehler zu erkennen und anzuzeigen. Zu diesen Sensorfehlern zählt auch ein Kurzschluß der Anschlußleitung gegen Masse (GND) oder gegen Batterie (IGN), eine Leitungsunterbrechung und Nebenschlüsse. Die Arbeitsweise einer solchen Schaltung mit Fehlererkennung veranschaulicht Fig. 2. Erreicht wird diese Erweiterung durch eine Aufteilung der zweiten Stromquelle (IQ in Fig. 1) in mehrere, hier in drei einzelne Stromquellen IQ₁,IQ₂,IQ₃. Das Potential über diesen Spannungsquellen wird jeweils mit Hilfe einer parallel geschalteten Verstärkerstufe, symbolisiert durch die Transistoren T₁,T₂ und T₃, ermittelt. Dioden D1 und D2 dienen zur Entkopplung der Einzelstromquellen.

Die Einzelstromquellen IQ₁,IQ₂ und IQ₃ sind derart zusammengeschaltet und an den aktiven Sensor 1 angeschaltet, daß die erste, direkt an den Sensor 1 angeschlossene Einzelstromquelle IQ₁ eine Leitungsunterbrechung oder einen unter einem Mindestwert liegenden Sensorstrom signalisiert. IQ₁ ist im vorliegenden Beispiel auf einen Nennstrom von I₁ = 3 mA ausgelegt, so daß erst dann, wenn der Signalstrom bzw. Sensorstrom I über diesen Wert ansteigt, die zugehörige Verstärkerstufe T₁ angesteuert wird. Ein "high" am Ausgang X₁ der zugehörigen Verstärkerschaltung T₁ zeigt folglich eine Leitungsunterbrechung oder einen aus einem anderen Grund zu niedrigen Sensorstrom I an.

Die nächste, über die Diode D1 angeschlossene Einzelstromquelle IQ₂, die hier für einen Nennstrom I₂ = 7 mA ausgelegt ist, wird stromführend, sobald der Sensorstrom den Mindestwert I₁ überschreitet. Am Ausgang der Verstärkerschaltung T2, die der Einzelstromquelle IQ₂ parallel liegt, steht so lange ein "high"-Signal an, bis der Sensorstrom die Summe aus den Nennströmen I₁ + I₂ der beiden Einzelstromquellen IQ₁ und IQ₂ erreicht oder überschreitet. Erst dann wechselt das Signal am Ausgang X₂ der Stufe T₂ von "high" zu "low". Da die Summe (I₁ + I₂) der Nennströme der beiden beschriebenen Einzeltromquellen IQ₁, IQ₂ über den unteren Stromschwellenwert I_{L} des Radsensors 1 liegt, in der Low-Phase des Sensors der Nennstrom der Einzelstromquelle IQ₂ jedoch noch nicht erreicht wird, steht am Ausgang der Verstärkerstufe T₂ bei ordnungsgemäßem Betrieb des Radsensors 1, d.h. bei ständigem Wechsel des Sensor-Signalstroms zwischen dem unteren (I₁) und dem oberen (I₂) Stromschwellenwert, das auswertbare Spannungssignal, welches das Ergebnis der Strom-Spannungswandlung darstellt und welches dem Ausgangssignal U_{A} nach Fig. 1 entspricht, zur Verfügung.

Die dritte Einzelstromquelle IQ₃ nach Fig. 2 dient zur Signalisierung eines zu hohen, fehlerbedingten Sensor-Stromes bzw. zu hohen Eingangsstromes in die Auswerteschaltung. Ein zu hoher Strom kann durch einen Nebenschluß oder gar einen Kurzschluß zum Versorgungsanschluß IGN hervorgerufen werden. Der Nennstrom der dritten Einzelstromquelle IQ₃ bestimmt den oberen Grenzwert. Wird die Summe I₁ + I₂ + I₃ der Nennströme der einzelnen Stromquellen IQ₁,Q₂,IQ₃ überschritten, hat dies eine Ansteuerung der Verstärkerstufe T₃ und damit einen Wechsel des Signals am Ausgang X₃ dieser Verstärkerstufe von "high" nach "low" zur Folge.

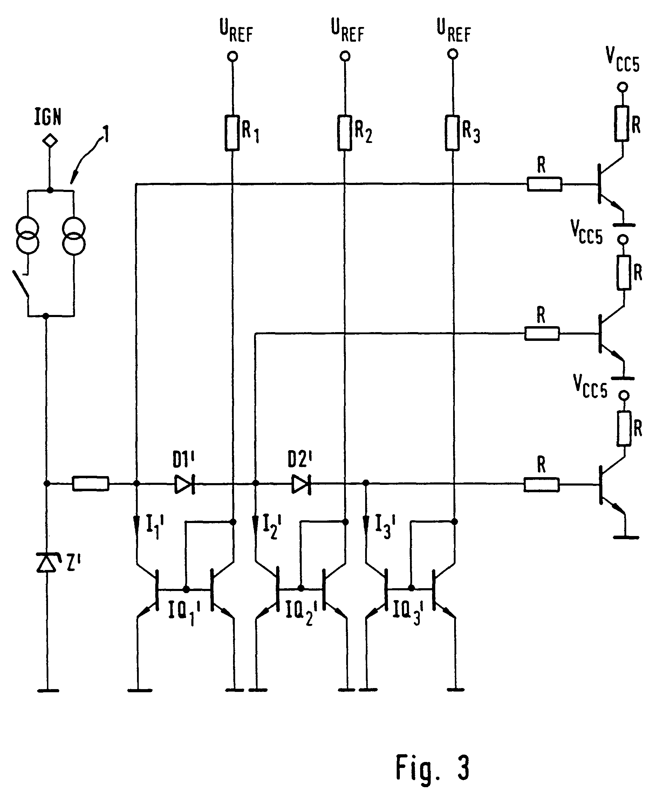

Fig. 3 zeigt ein Beispiel zur Realisierung der Schaltung nach Fig. 2. Alle dargestellten Komponenten sind Bestandteile einer integrierten Schaltung. Die Einzelstromquellen IQ₁' ,IQ₂' und IQ₃' sind hier durch Stromspiegelschaltungen realisiert. Durch entsprechende Dimensionierung der ohmschen Widerstände R₁,R₂,R₃ und Vorgabe der Versorgungsspannung U_{REF} wird in bekannter Weise der Nennstrom oder eingeprägter Strom der einzelnen Stromquellen vorgegeben. Aus dem Potential am Ausgang X₁', X₃' der Verstärkerschaltungen T₁' und T₃' läßt sich wiederum in der anhand der Fig. 2 beschriebenen Weise erkennen, ob ein Sensorfehler vorliegt. Das gewandelte Sensorsignal steht am Ausgang X₂' der Verstärkerschaltung T₂' zur weiteren Auswertung an.

Die zur Einstellung der Nennströme benötigte Spannung U_{REF} ist in jedem Falle stabilisiert, während für die Versorgungsspannung V_{CC5} in manchen Anwendungsfällen eine nicht oder nur grob stabilisierte Spannung genügen dürfte.

Aus der vorausgegangenen Beschreibung der Figuren 1 bis 3, welche den Stand der Technik wiedergeben ist zu erkennen, daß sich die Schaltung besonders gut in Form von integrierten Schaltungen verwirklichen läßt. Für die Signalauswertung und Fehlererkennung sind nur wenige Bauteile erforderlich. Der Energieverbrauch ist gering. Ein wesentlicher Vorteil besteht noch darin, daß keine hohen Anforderungen an die Genauigkeit der Bauteile, Einstellung der Stromschwellenwerte usw. zu stellen sind. Dies wirkt sich günstig auf die Herstellungskosten für eine solche Schaltungsanordnung aus. Außerdem ist aus gleichen Gründen eine hohe Zuverlässigkeit der Arbeitsweise zu erwarten. Da die Nennströme der einzelnen Stromquellen und damit die Schwellenwerte für die Fehlererkennung, beispielsweise durch Einstellung der Referenzspannung, auf einfache Weise und mit geringem Aufwand verändert werden können, ist eine Anpassung an Sensoren unterschiedlicher Art leicht möglich.

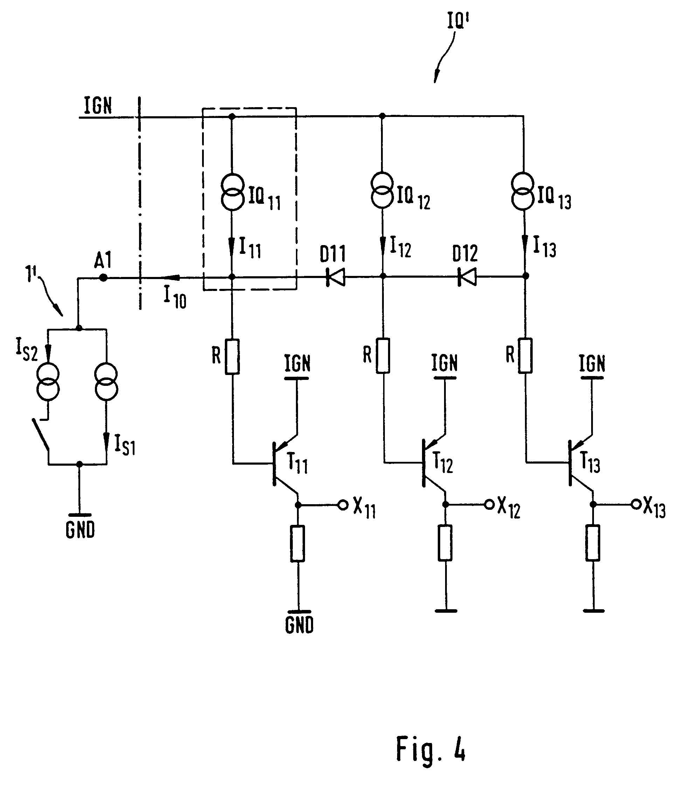

Im Unterschied zur Schaltungsanordnung nach Fig. 2 ist bei dem Ausführungsbeispiel der Erfindung gemäß Fig. 4 eine aus den Einzelstromquellen IQ₁₁, IQ₁₂ und IQ₁₃ bestehende Stromquelle zwischen dem Batterieanschluß IGN - dies ist im allgemeinen der positive Pol - und einem Anschluß oder Anschlußpin A1, der zum Anschluß des zugehörigen aktiven Sensors 1' dient, eingefügt. Eine strichpunktierte Linie symbolisiert die Trennung der in einem Regler untergebrachten, rechts dargestellten elektronischen Schaltungskomponenten von dem links dargestellten Anschlußpin A1, an den über eine Signalleitung der aktive Sensor 1' angeschlossen ist. Der zweite Sensoranschluß liegt an Masse GND. Die Stromquelle IQ' und der aktive Sensor 1' sind wie die in den zuvor genannten Figuren 1 bis 3 erläuterten Schaltungen in Reihe geschaltet.

Die Einzelstromquelle IQ₁₂ bzw. die zugehörige Verstärkerschaltung T₁₂ stellt - in gleicher Weise wie die Stromquelle IQ₂ mit der Verstärkerschaltung T₂ der Schaltung nach Fig. 2 - an ihrem Ausgang X₁₂ im Normalfall das Sensorsignal zur Verfügung. Die Stromquelle IQ₁₁ und die zugehörige Verstärkerschaltung T₁₁ signalisieren eine Leitungsunterbrechung bzw. einen offene Anschlußpin A1, während die Einzelstromquelle IQ₁₃ bei Kurzschluß oder Nebenschluß zwischen dem Anschluß A1 und Masse GND einen Wechsel des Signals am Ausgang X₁₃ der Verstärkerschaltung T₁₃ herbeiführt.

Der maximal mögliche Kurzschlußstrom, der bei einem Kurzschluß des Anschlusses A1 zur Masse auftritt, ist durch die Summe der eingeprägten Ströme der drei Einzelstromquellen IQ₁₁, IQ₁₂, IQ₁₃, also I₁₁ + I₁₂ + I₁₃, gegeben. Das Vorliegen eines Kurzschlusses wird durch das Ausgangssignal X₁₃ angezeigt. Die dargestellte Schaltung, die vorzugsweise durch Integrationstechnik hergestellt wird, ist zumindest für eine kurzzeitige Belastung mit diesem Kurzschlußstrom ausgelegt. Gegen die thermische Belastung bei Aufrechterhaltung des Kurzschlusses kann in die integrierte Schaltung ein temperaturabhängiges HalbleiterElement eingebaut werden, das in bekannter Weise eine Abschaltung der Stromzuführung herbeiführt.

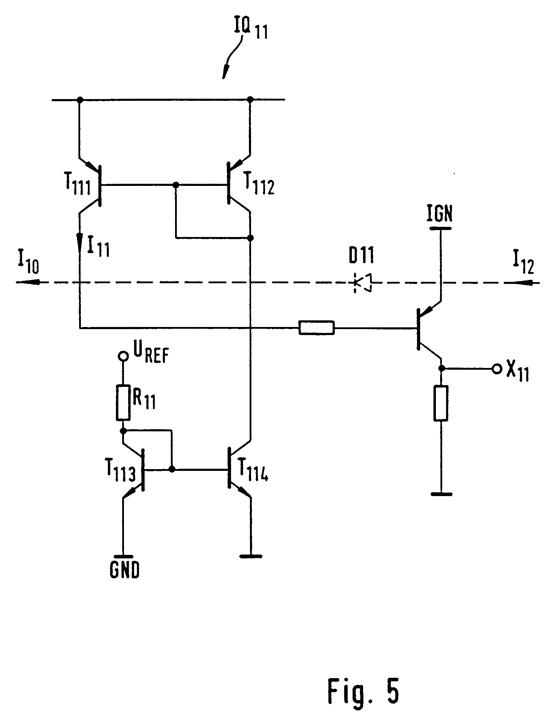

Fig. 5 zeigt Einzelheiten der Einzelstromquelle IQ₁₁ ; die anderen Einzelstromquellen besitzen den gleichen Aufbau. Es wird hier wiederum, wie bereits anhand der Fig. 3 beschrieben, eine Stromspiegelschaltung verwendet. Die Größe des ohmschen Widerstandes R₁₁ und die Höhe der Referenzspannung U_{REF} bestimmen den Strom, der über den als Diode geschalteten Transistor T₁₁₃ fließt. Die Stromspiegelung über den Transistor T₁₁₄, der wiederum den Strom über T₁₁₂ und durch erneute Stromspiegelung den Strom über den Transistor T₁₁₁ festlegt, hat zur Folge, daß der durch den Widerstand R₁₁ und die Referenzspannung U_{REF} eingestellte Strom zum Nennstrom oder eingeprägten Strom der Stromquelle IQ₁₁ wird. Der Nennstrom der Stromquelle ist hier mit I₁₁ bezeichnet. Die beiden anderen in Fig. 4 dargestellten Einzelstromquellen sind exakt in gleicher Weise aufgebaut.

In einem Ausführungsbeispiel wurde ein aktiver Sensor 1' mit den Stromschwellenwerten 7 mA/14 mA eingesetzt. In diesem Fall wurden die Nennströme der drei Einzelstromquellen IQ₁₁, IQ₁₂, IQ₁₃ auf jeweils 5 mA festgelegt. Der Sensorstrom von 7 mA setzt sich in diesem Fall aus dem Nennstrom I₁₁ = 5 mA der Einzelstromquelle IQ₁₁ und einem über die Diode D₁₁ zugeführten Strom von 2 mA zusammen, den die Einzelstromquelle IQ₁₂ liefert. Wird die obere Stromschwelle von 14 mA erreicht, setzt sich dieser Strom aus den Nennströmen der beiden Quellen IQ₁₁ und IQ₁₂ und einem Differenzstrom von 4 mA, den die Quelle IQ₁₃ liefert, zusammen.

Bei einem Kurzschluß des Sensors 1' ist lediglich eine Erhöhung des Stromes auf 15 mA möglich.

## Patentansprüche

1. Regler für Bremsen von Kraftfahrzeugen mit Anschlußstiften oder Anschlußpins (A1) zum Anschluß von Radsensoren, einem Masseanschluß (GND), einem Batterie- bzw. Individualanschluß (IGN) mit jeweils einer Schaltungsanordnung zur Strombegrenzung für jeweils einen der Anschlußstifte oder Anschlußpins für Radsensoren zum Schutz vor Kurzschluß oder Überlastung, bei dem
die Schaltungsanordnung zum Auswerten eines binären, durch eine untere und eine obere Stromschwellenwerte definierten Signals eines aktiven Radsensors (1') dient, indem die Schaltungsanordnung eine Stromquelle (IQ'; IQ₁₁, IQ₁₂, IQ₁₃) aufweist, die zwischen dem Batterieanschluß (IGN) und einem Anschlußstift oder Anschlußpin (A1) eingefügt ist und für einen Nennstrom ausgelegt ist, der zwischen dem unteren und dem oberen Schwellenwert des auszuwertenden Signals liegt und wobei die Spannung über der Stromquelle (IQ') zum Erkennen des Signalzustandes des binären Signals des aktiven Sensors auswertbar ist,
**dadurch gekennzeichnet, daß** die Stromquelle (IQ') aus mehreren parallel geschalteten Einzelstromquellen (IQ₁₁, IQ₁₂, IQ₁₃) zusammengesetzt ist, denen jeweils eine Verstärkerschaltung (T₁₁, T₁₂, T₁₃) zugeordnet ist, die das Potential der jeweiligen Stromquelle ermittelt, wobei aus den Ausgangssignalen (X₁₁, X₁₂, X₁₃) der Verstärkerstufen (T₁₁, T₁₂, T₁₃) das Unterschreiten eines vorgegebenen, unter dem unteren Schwellenwert liegenden Mindeststroms des Sensorstroms, das Überschreiten eines vorgegebenen, über dem oberen Schwellenwert liegenden Maximalstroms des Sensorstroms und das Auftreten eines vorgegebenen, zwischen den Stromschwellenwerten liegenden mittleren Wertes des Sensorstroms erkennbar ist.

2. Regler nach Anspruch 1, **dadurch gekennzeichnet, daß** die Stromquelle (IQ') aus drei Einzelstromquellen (IQ₁₁, IQ₁₂, IQ₁₃) besteht, die unter Einfügung von Entkoppelungsdioden (D₁₁, D₁₂) parallelgeschaltet sind und von denen eine Einzelstromquelle (IQ₁₁) auf den Mindeststrom, die zweite (IQ₁₂) auf die Differenz zwischen dem mittleren Wert des Sensorstroms und dem Mindeststrom und die dritte Quelle (IQ₁₃) auf die Differenz zwischen dem Maximalstrom und dem mittleren Wert des Sensorstroms ausgelegt sind.

3. Regler nach Anspruch 2, **dadurch gekennzeichnet, daß** bei Vorgabe eines unteren Stromschwellenwertes (I_{L}) des Sensorstroms zwischen 5 und 8 mA und eines oberen Stromschwellenwertes des Sensorstroms (I_{H}) zwischen 11 und 18 mA als Mindeststrom ein Strom von 3 mA, als Mittelwert ein Strom von etwa 10 mA und als Maximalstrom ein Strom von etwa 17 mA vorgegeben sind.

4. Regler nach einem oder mehreren der Ansprüche 1 bis 3, **dadurch gekennzeichnet, daß** die Schaltungsanordnung Bestandteil einer integrierten Schaltung ist, wobei die Einzelstromquellen (IQ₁₁, IQ₁₂, IQ₁₃) auf Basis von Stromspiegelschaltungen aufgebaut sind, und wobei die Nennströme der einzelnen Stromquellen (IQ₁₁, IQ₁₂, IQ₁₃) aus einer gemeinsamen Referenzspannungsquelle (U_{REF}) über ohmsche Widerstände und weitere Stromspiegelschaltungen abgeleitet werden.

## Claims

1. Controller for brakes of motor vehicles including connection pins (A1) for the connection of wheel sensors, a connection to ground (GND), a battery or individual connection (IGN) with respectively one circuit for the current limitation for respectively one of the connection pins for wheel sensors as a short circuit or overload protection, wherein the circuit is used for evaluating a binary signal of an active wheel sensor (1') defined by a bottom and a top current threshold value, because the circuit includes a current source (IQ' ; IQ₁₁, IQ₁₂, IQ₁₃) that is interposed between the battery connection (IGN) and a connection pin (A1) and is rated for a nominal current lying between the bottom and the top threshold value of the signal being evaluated, and wherein the voltage across the current source (IQ') can be evaluated for detecting the signal state of the binary signal of the active sensor,
**characterized in that** the current source (IQ') is composed of several parallel connected individual current sources (IQ₁₁, IQ₁₂, IQ₁₃) associated with which is respectively one amplifier circuit (T₁₁, T₁₂, T₁₃) determining the potential of the respective current source, wherein output signals (X₁₁, X₁₂, X₁₃) of the amplifier circuits (T₁₁, T₁₂, T₁₃) permit recognizing when the sensor current falls below a predetermined minimum current lying under the bottom threshold value, when a predetermined maximum current of the sensor current lying above the top threshold value is exceeded, as well as when a predetermined mean value of the sensor current lying between the current threshold values appears.

2. Controller as claimed in claim 1,
**characterized in that** the current source (IQ') is composed of three individual current sources (IQ₁₁,IQ₁₂,IQ₁₃) connected in parallel to decoupling diodes (D₁₁, D₁₂) inserted between them, and one individual current source (IQ₁₁) being laid out for the minimum current, the second source (IQ₁₂) being laid out for the difference between the mean value of the sensor current and the minimum current, and the third source (IQ₁₃) being laid out for the difference between the maximum current and the mean value of the sensor current.

3. Controller as claimed in claim 2,
**characterized in that** when a bottom threshold value (I_{L}) of the sensor current is preset between 5 and 8 mA and a top current threshold value of the sensor current (I_{H}) is preset between 11 and 18 mA as a minimum current, a current of 3 mA is preset as a minimum current, a current of 10 mA approximately is preset as a mean value, and a current of 17 mA approximately is preset as a maximum current.

4. Controller as claimed in any one or more of claims 1 to 3,
**characterized in that** the circuit forms part of an integrated circuit arrangement, wherein the individual current sources (IQ₁₁, IQ₁₂, IQ₁₃) are constructed on the basis of current mirror circuits, and wherein the nominal currents of the individual current sources (IQ₁₁, IQ₁₂, IQ₁₃) are derived from a common reference voltage source (U_{REF}) by way of ohmic resistors and additional current mirror circuits.

## Revendications

1. Régulateur pour freins de véhicules automobiles comportant des broches de connexion (A1) pour le branchement de capteurs des roues, une borne de masse (GND), une borne de batterie ou borne individuelle (IGN) avec dans chaque cas un circuit pour limiter le courant pour, dans chaque cas, l'une des broches de connexion pour les capteurs des roues, en vue de la protection contre un court-circuit ou une surcharge, dans lequel le circuit sert à l'exploitation d'un signal binaire, définissant une valeur de seuil basse et une valeur de seuil haute du courant, d'un capteur de roue (1') actif, en ce que le circuit comporte une source de courant (IQ' ; IQ₁₁, IQ₁₂, IQ₁₃) qui est insérée entre la borne de batterie (IGN) et une broche de connexion (A1), et est dimensionnée pour un courant nominal qui se situe entre la valeur de seuil basse et la valeur de seuil haute du signal à exploiter, et la tension étant exploitable par la source de courant (IQ') pour déceler l'état du signal binaire du capteur actif, **caractérisé en ce que** la source de courant (IQ') est composée de plusieurs sources de courant individuelles (IQ₁₁, IQ₁₂, IQ₁₃) couplées en parallèle, à chacune desquelles est associé un circuit d'amplification (T₁₁, T₁₂, T₁₃) qui détermine le potentiel de la source de courant respective, les signaux de sortie (X₁₁, X₁₂, X₁₃) des étages d'amplification (T₁₁, T₁₂, T₁₃) permettant de reconnaître le sous-dépassement d'un courant minimal prédéfini, inférieur à la valeur de seuil basse, du courant du capteur, le dépassement d'un courant maximal prédéfini, supérieur à la valeur de seuil haute, du courant du capteur, et l'apparition d'une valeur médiane prédéfinie, située entre les valeurs de seuil du courant, du courant du capteur.

2. Régulateur selon la revendication 1, **caractérisé en ce que** la source de courant (IQ') est constituée de trois sources de courant individuelles (IQ₁₁, IQ₁₂, IQ₁₃) qui sont couplées en parallèle par insertion de diodes de découplage (D₁₁, D₁₂), et dont une source de courant individuelle (IQ₁₁) est dimensionnée sur le courant minimal, la deuxième (IQ₁₂) sur la différence entre la valeur médiane du courant du capteur et le courant minimal, et la troisième source (IQ₁₃) sur la différence entre le courant maximal et la valeur médiane du courant du capteur.

3. Régulateur selon la revendication 2, **caractérisé en ce que** dans le cas où l'on sélectionne une valeur de seuil inférieure (IL) du courant du capteur entre 5 et 8 mA et une valeur de seuil supérieure du courant du capteur (I_{H}) entre 11 et 18 mA, on prédéfinit comme courant minimal un courant de 3 mA, comme valeur médiane un courant d'environ 10 mA et comme valeur maximale un courant d'environ 17 mA.

4. Régulateur selon une ou plusieurs des revendications 1 à 3, **caractérisé en ce que** le circuit fait partie intégrante d'un circuit intégré, les sources de courant individuelles (IQ₁₁, IQ₁₂, IQ₁₃) sont constituées sur la base de circuits de réflexion du courant et les courants nominaux des différentes sources de courant (IQ₁₁, IQ₁₂, IQ₁₃) étant dérivés d'une source de tension de référence commune (U_{REF}), par des résistances ohmiques et d'autres circuits à miroir de courant.
